# EUROPEAN PATENT SPECIFICATION

(11) **EP 2 078 382 B1**
(45) Date of publication and mention of the grant of the patent: **07.06.2017**
(21) Application number: 07848844.2
(22) Date of filing: 02.11.2007
(51) Int. Cl.: H04L 12/24

(54) **AN ADMINISTRATION PORTAL**
ADMINISTRATIONSPORTAL
PORTAIL D'ADMINISTRATION

(30) Priority: 03.11.2006 AU 2006906147
(43) Date of publication of application: 15.07.2009
(73) Proprietor: Network Box Corporation Limited, Hong Kong (CN)
(72) Inventor: WEBB-JOHNSON, Mark, Crispin, Hong Kong (CN)
(74) Representative: Gill Jennings & Every LLP
(86) International application number: PCT/IB2007/003317
(87) International publication number: WO 2008/053336

(56) References cited:
- WO-A2-03/041360
- WO-A2-03/041360
- WO-A2-2005/119519
- CN-A- 1 617 510
- CN-A- 1 753 364
- US-A1- 2002 147 801
- US-A1- 2002 156 879

## Description

### FIELD

The present invention relates to an administration portal for a network security system.

### BACKGROUND

Network perimeter security systems are installed at the edge of local and wide area networks of entities to protect the networks from being compromised by external networks. For instance, a connection to the Internet may be protected by a number of machines including a security server connected directly to the Internet to protect against a wide variety of Internet threats, such as viruses, worms, trojans, phishing, spyware, spam, undesirable content and hacking. Configuration files of the security server include signatures or pattern files that are used as a basis to detect the threats and are updated on a regular basis. Given the frequency with which Internet threats change and are created, the security servers are normally updated in a regular and timely manner by a managed security service provider (MSSP) using remote equipment of a central network operations centre (NOC).

In addition to controlling the update of the threat signatures, the MSSP may also control other configuration settings of the security servers installed at various locations, in order to maintain the integrity of security servers and their performance. The configuration settings may include the manner in which parameters are set for spam filters or for filters that are used to detect malicious software ("malware"), such as viruses, worms, trojans etc. The MSSP may also control the manner in which spam can be released to terminals in the protected network.

For some networks, however, complete control by the MSSP may be contrary to an entity's security policy, inefficient, or otherwise disadvantageous, for example in instances where a security server is generating false positives, ie incorrectly withholding a valid email as an identified threat. Accordingly, it is desired to provide at least a useful alternative and preferably a facility which provides for more flexible configuration and control, without affecting the integrity of the network security system.

PCT patent application number WO 2005/119519 discloses a method and system for providing a community of users access to content items. US patent application publication number 2002/147801 discloses a system and method for provisioning resources to users based on policies, roles, organizational information, and attributes.

Aspects of the invention are set out in the appended claims.

### DESCRIPTION OF THE DRAWINGS

Preferred embodiments of the present invention are hereinafter described, by way of example only, with reference to the accompanying drawings, wherein:
Figure 1 is a block diagram of a preferred embodiment of a security server connected to a local area network (LAN);
Figure 2 is a diagram of the architecture of a preferred embodiment of a security system;
Figure 3 is a block diagram of a preferred embodiment of components of a security server of the system;
Figure 4 is a screen shot of an overview interface of an administration portal of the security server;
Figure 5 is a screen shot of a mail interface of the administration portal;
Figure 6 is a screen shot of a further mail interface of the administration portal;
Figure 7 is a screen shot of a spam interface of the administration portal;
Figure 8 is a screen shot of a malware interface of the administration portal; and
Figure 9 is a view of a report message generated by the administration portal.

### DESCRIPTION

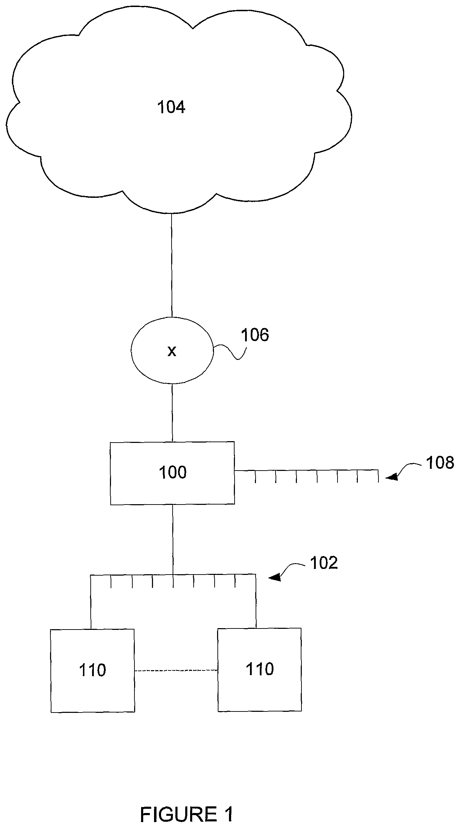

A security server 100, as shown in Figure 1, provides an Internet threat protection appliance to protect a local area network (LAN) 102 of an entity from a wide variety of Internet threats. The threats include viruses, worms, trojans, phishing, spyware, spam, undesirable content and hacking, and any other form of unwanted code, traffic or activity relevant to the LAN 102. The security server or box 100 is connected directly to an external communications network 104, such as the Internet, by a router 106, thereby being positioned between the LAN 102 and the Internet 104. The LAN 102 connects a number of terminals 110 of the network 102. The terminals 110 are computer devices, such personal computers or telephones, capable of handling network traffic and messages, such as email and HTTP requests and responses. The security server or box 100 may also provide support for a demilitarised zone (DMZ) 108 and, in alternative embodiments, the server 100 may include a number of machines. The box 100 can, for example, be one of the threat protection appliances produced by Network Box Corporation. The network architecture in which the security server 100 is used can vary considerably. For example, a number of LANs or a wide area network (WAN) may be protected by one box 100, or the box 100 may support more than one DMZ.

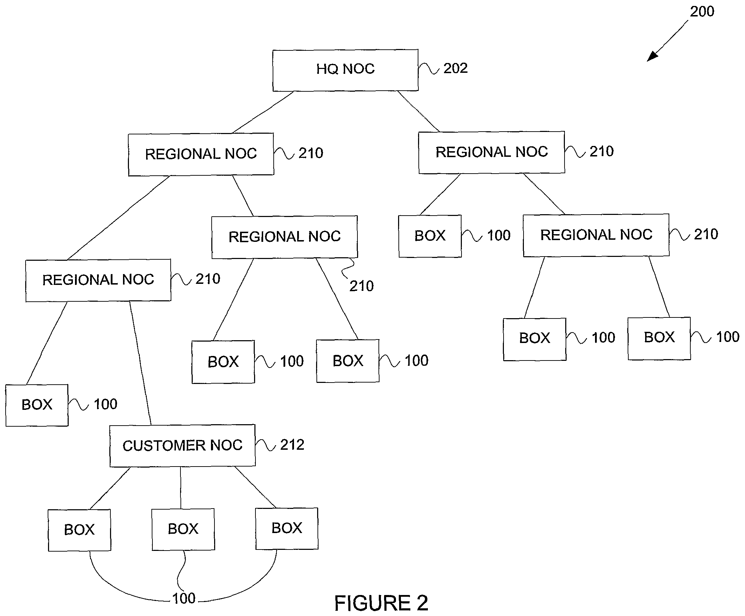

A security system 200, as shown in Figure 2, includes a number of boxes 100 which are all updated by configuration files delivered from one or more central or headquarters network operations centres (NOC) 202 of a managed security service provider (MSSP). The headquarters NOC 202 provides a root node of the security system 200, and the security boxes 100 are leaf nodes of the security system 200 and are connected in a hierarchy by intervening nodes 210 and 212 of intermediate levels in the hierarchy so that the security system 200 has a tree structure, as shown in Figure 2. The intervening nodes 210, 212 include regional NOCs 210 allocated to cover a geographic region, such as Australia and New Zealand, and customer NOCs 212 which may be allocated to serve one or more security boxes 100 of an entity. In alternative embodiments, the number of intermediate NOCs 210, 212 may be varied as desired or omitted altogether. The configuration files are delivered from an upstream node (typically, but not always, the root node 202) to downstream nodes (typically the leaf nodes 100) via the intermediate nodes 210 and 212 as updates.

The box 100 and the nodes 202, 210 and 212 each include a central processing unit, volatile memory, permanent storage (eg flash memory, hard disk) and at least one network interface card for connection to the public network 104 and local network 102. The box 100 and the nodes 202, 210, 212 can be implemented using general purpose computers. Also, ASIC based systems operating with flash memory or other purpose-built hardware can be used.

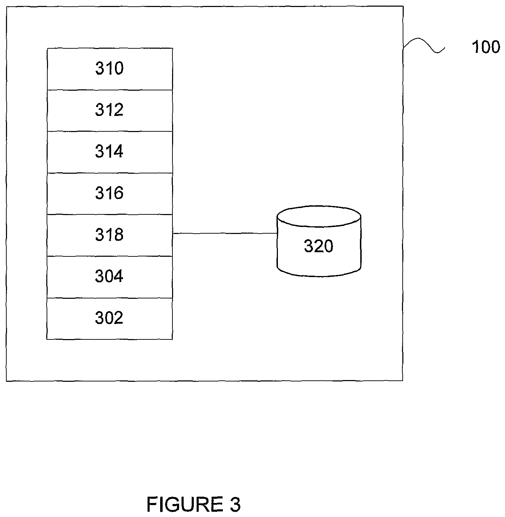

The security server 100, as shown in Figure 3, includes an administration module 310 and a number of control elements 312, 314, 316 and 318 that provide an administration portal, and which all run on an operating system 302, such as Linux, of the box 100. The administration module 310 and the control elements 312 to 318 have access to and utilise a database 320 maintained by a database server 304, such as MySQL, of the box 100. The administration module 310 is accessible by a NOC 202 of the MSSP, and is used to maintain and adjust tables of permission attributes for all of the users authorised to use a terminal 110 connected to the network 102 of the box 100. A permission attribute is associated respectively with a control element 312 to 318 and defines the ability of a user when validly logged onto a terminal (i.e. authenticated) to access that control element. The control elements 312 to 318 each provide access to respective services or processes performed by the security server 100, and allow adjustment of parameters associated with services and processes performed by the network security system. Associated with a permission attribute for a service are capability attributes defining a level or access to respective services or processes of a service. The attributes are maintained in tables of the database 320.

A mail control element 312 provides access to search and report services. A spam control element 314 provides access to filter, release, search, blacklisting, whitelisting and report services. A malware control element 316 provides access to filter, release (eg to a virus administrator), search and report services. A web browsing control element 318 provides access to HTTP response filter (to block undesired or unauthorised content) and report services. Capability level attributes are associated with the search, report, filter and release services for each control element accessible by a terminal. The capability level attributes each represent a level in range, eg from 1 to 10, and control the manner in which a terminal can utilise the services.

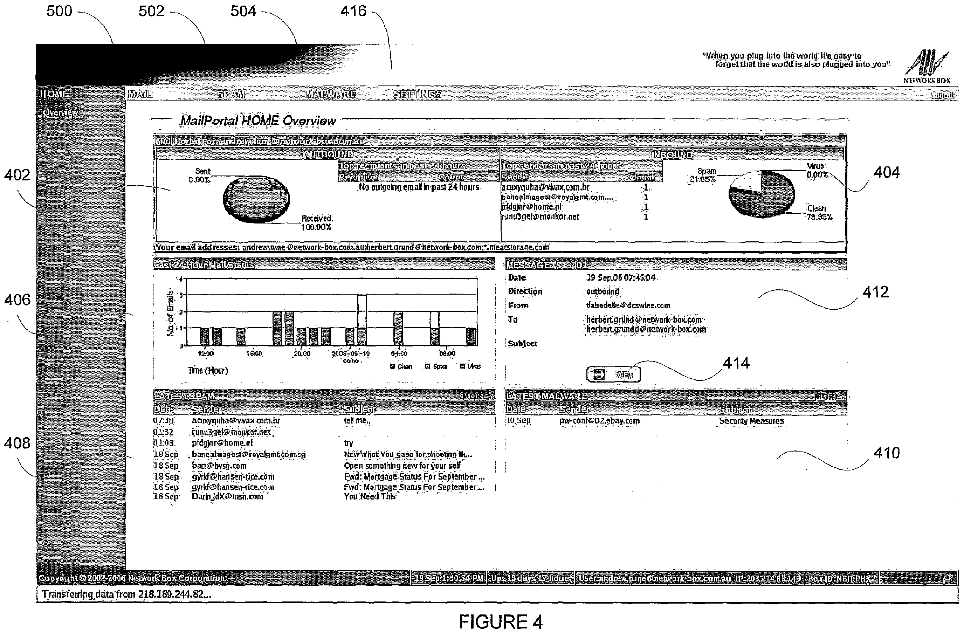

The administration module 310 generates a user interface that can be rendered by a web browser, as shown in Figure 4. The web browser may be run by a terminal 110 or NOC 202. The interface shown is an overview interface that displays data generated by outbound and inbound report components 402 and 404 and a status report component 406 of the mail control element 312, for mail received in a 24 hour period. Spam and malware reports components 408 and 410 also provide data on the messages that have been received and identified as spam or malware, and are produced by the spam and malware control elements 314 and 316. The reports generated may be for the entire network 102, or individual recipients or users of the network associated with a terminal 102. The interface shown in Figure 4 in this instance is for a single user, designated by an email address of the network 102. The interface parts generated by the spam and malware report components 408 and 410 allow an individual message to be selected so as to display the meta data for that message in another part 412 of the overview interface. The actual message can be accessed by selecting a view control 414 of the interface.

Initially, the permission attributes for the control elements of a box 100 are set to *mssp*, which restricts access to the administration module 310, and the control elements to any authorised NOC (eg the HQ NOC 202), ie the MSSP. The associated capability level attributes for the *mssp* permission attributes are all set to the highest level. Using a settings control 416 provided on the overview interface, the MSSP can use the administration module 310 to access and adjust the permission attributes and associated capability levels for the control elements. The settings interface of the administration module 310 allows the MSSP to select at least one user of the network 102 and set the permissions attributes for one or more of the control elements to *admin.* This effectively delegates the services of that control element to the user thereby granting administration rights when logged onto a terminal 110. For example, setting the permission attribute for the mail, spam and malware control elements 312 to 316 to *admin* for a user, would provide the user's terminal with access to all the components of the interface as shown in Figure 4. If the malware control element 316 remains at *mssp*, then the user would not have access to the malware report component 410. The capability levels for each of the services can also be set accordingly for an administrator. For instance, the view control 414 may be made available to provide view access for an administrator, or alternatively the capability level may be set to a lower level so that the view control 414 does not appear, and only the meta data associated with the message can be viewed.

A user associated with a permission attribute of *admin* for a control element 312 to 318 can then use a terminal 110 to further delegate control for that element to an individual user of a terminal. An *mssp* user is also able to do this, as any more authorative party can control the attributes of any less authorative party. A terminal 110 with an *admin* permission attribute is able to access the settings interface of the administration module 310 to set the permission attribute to *user* for selected terminals 110 for the control elements that administration terminal has *admin* privileges. The control element is then accessible by a terminal granted user privileges. For instance, if the permission attribute for a terminal 110 for the mail, spam and malware control elements 312 to 316 is set to *user,* then that terminal would have access to the interface shown in Figure 4. The only difference between the *mssp* and an *admin* permission attribute is that no further delegation or adjustment of the permission attribute can be made by a user with a *user* attribute, and services and processes cannot be performed for more than that user, ie the services and processes are only available for that particular terminal user, eg mail reports can only be generated for that user's address. An *admin* user can also set the associated capability level attributes for a permission attribute it sets to *user.*

The manner in which attributes and capability levels are assigned, as described above, is defined by a permissions model of the security system 200. In addition to the above, this allows a user with *mssp* or *admin* privileges to delegate control to users individually or as a group. The group may be all the users of a LAN or WAN or one of a number of user groups in a network. A group could even extend across more than one network. An *mssp* user delegates *admin* privileges on a per administrator basis, but even administrators could have their delegated privileges controlled on a group basis under the permission model. Group control is particularly advantageous. For example, this allows an *admin* user to set a whitelist for a entire group of users, whereas a *user* user is only able to control their whitelist.

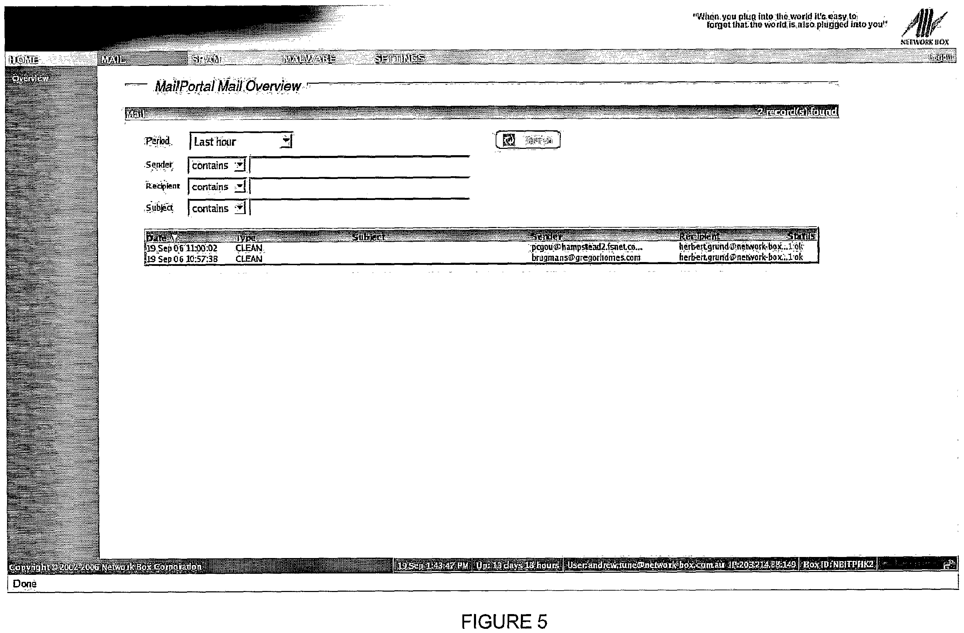

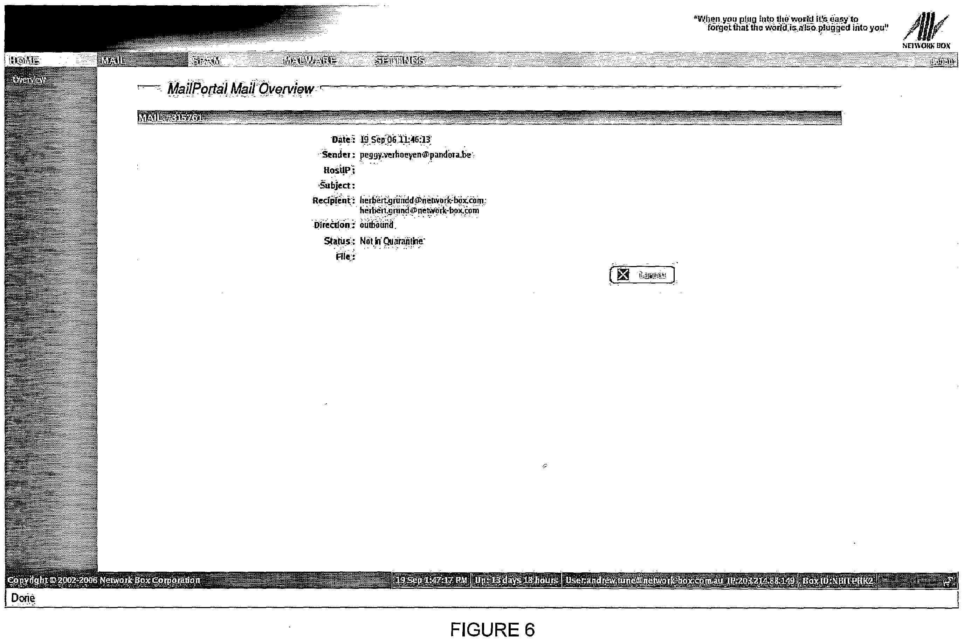

The control elements 312 to 318 are accessible via the interface of the administration module 310 using respective tab controls 500, 502, 504 of the interface. This provides access to the services based on the capability levels assigned for a user. For example, selecting the mail tab 502 provides an interface to the search service, as shown in Figure 5, of the mail control element 312. This allows a user on a terminal 110 to search emails that have been processed by the security server 100 within a given period based on search fields that are available according to the associated capability level. The results are displayed and an individual message can be selected so as to then display the meta data associated with the message, as shown in Figure 6. Again, based on the capability level, mail can then be dealt with, such as deleted, released or otherwise.

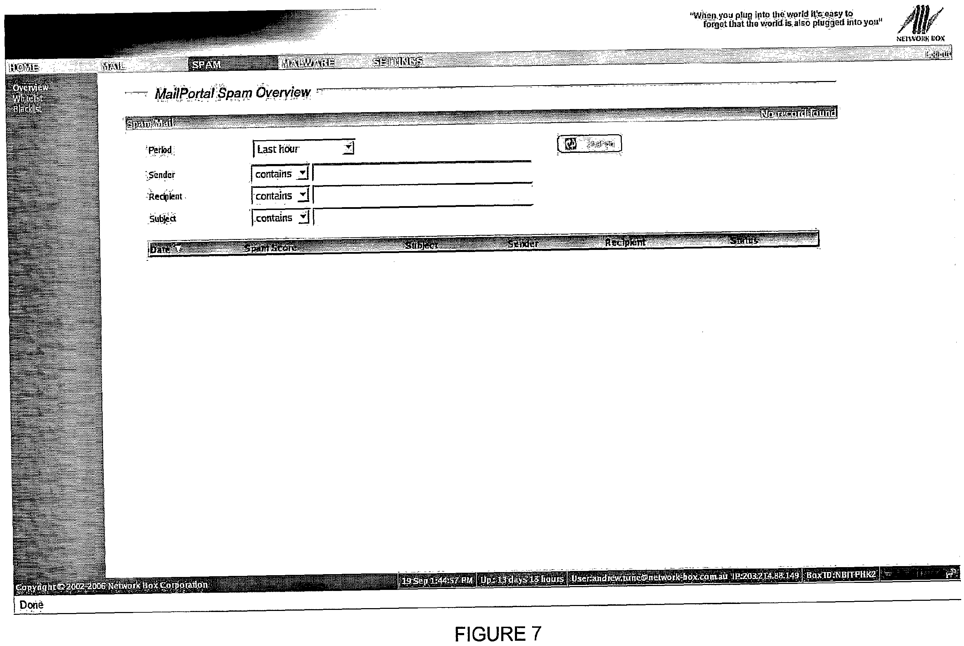

Similarly, by selecting the spam control tab 502, an interface to services of the spam control element 314 is generated, such as shown in Figure 7. A search service allows spam messages trapped by the spam filters of the box 100 to be searched, on the basis of fields available according to the associated capability level, as shown in Figure 7. If the capability is set to a level that provides access to an interface to a filter service, then parameters for the spam filters can be set using the user's terminal 110. Normally this capability would only be set to allow access to a user that has an *admin* permission attribute for the spam control element 314, but it could also be granted to a user with a *user* attribute. The results of searches for spam messages are displayed, and an individual message can be selected so as to review the meta data. Based on the capability level, the message can then be released. For a *user* permission attribute, the associated release capability level may be set to allow encapsulated release whereby when the email is released from the box 100 to the terminal 110, it is sent as an attachment to a cover email that explains the nature of the release. For example, it may state "the attached email arrived for you on ... and was released by ... at ...". A more restricted higher level release capability attribute allows access to a raw release process whereby when a selected the email is released it is sent directly to an inbox of the user, as if it had not been intercepted by the box 100.

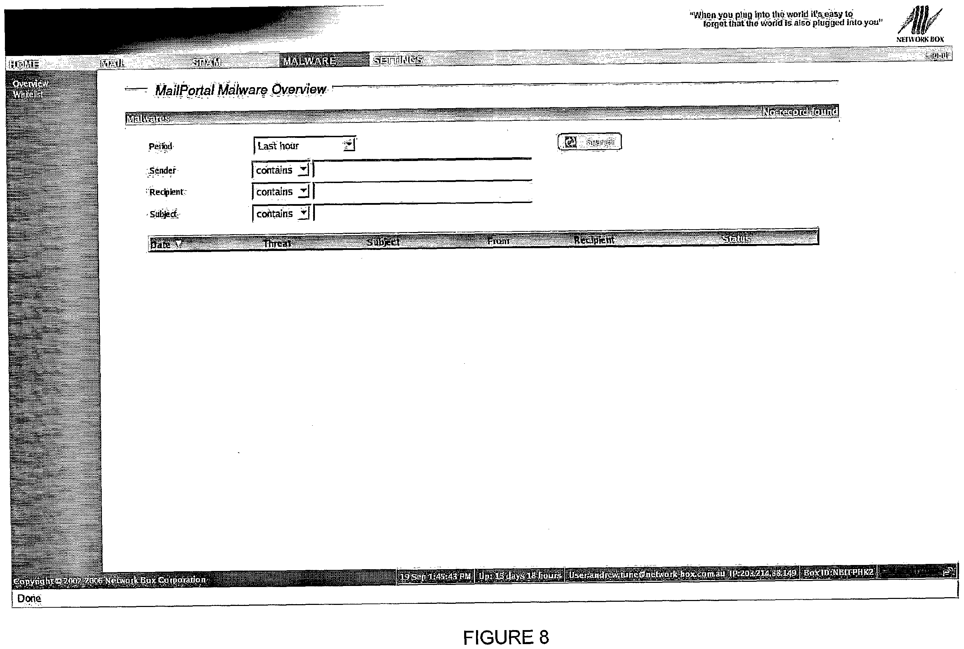

Selecting the malware control tab 504 provides access to an interface to malware services of the malware control element 316, as shown in Figure 8, based again on the capability level. This is similar to that for the spam control element 314, except that only malware messages are accessible. The capability levels would also normally be set so that raw access to messages is even further restricted.

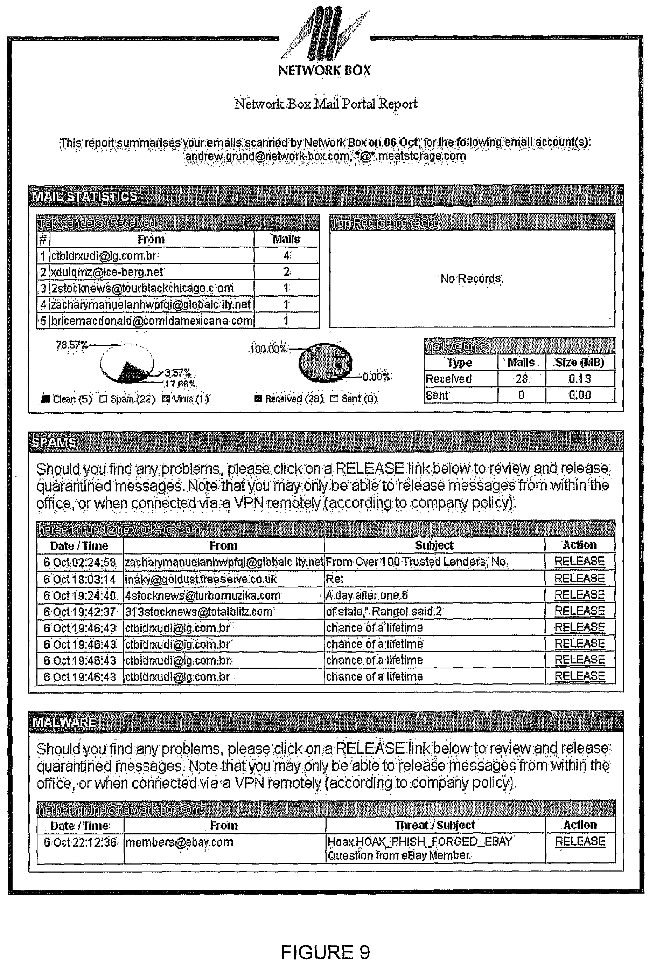

A user may be given access to the report services of the control elements 312 to 318 and have capability levels set that provides access to parameters that control not only the manner in which the report components on the overview interface is displayed, but also the timing and manner in which reports are emailed to a user's inbox. For example, Figure 9 illustrates a report that can be sent by the administration module 310 accessing selected services of the control elements 312 to 318. This provides a dynamic report on mail messages in general, and spam messages that have been trapped. The report also provides a HTTP release link for each spam message, that when activated sends a request to the security server 100 to release the message according to the user's release capability level attribute for the spam control element 314.

The components 310 to 318 of the server 100, discussed above, are preferably implemented using computer program instruction code written in languages such as Perl, C, C++ and Java. The administration module also includes a web server, such as Apache, and Java Server Pages to deliver the dynamic and static interface components Alternatively, the processes performed by the components 310 to 316 may be implemented at least in part by dedicated hardware circuits, such as ASICs or FPGAs.

The administration portal provided by the security server 100 is particularly advantageous in that it allows individual control elements to be delegated from an MSSP to an administrator and then to individual users in the network. Allocating capability level attributes to the respective services and processes provided by the control elements provides a further level of restriction and control associated with the delegation. The ability to assign the attributes on a group basis is also advantageous. The portal allows the integrity of the security system to be maintained, whilst providing considerable flexibility in the degree to which users on a network are able to control network security services and delivery of network messages.

Many modifications will be apparent to those skilled in the art without departing from the scope of the present invention as herein described with reference to the accompanying drawings.

## Claims

1. An administration portal of an Internet threat protection security server (100), including:
control elements allowing a user of a network to access respective services performed by said Internet threat protection security server, said control elements including:
(i) a mail control element (312) providing access to a search service to search emails that have been processed by the security server;
(ii) a spam control element (314) providing access to one or more of filter, release, search, blacklisting and whitelisting services;
(iii) a malware control element (316) providing access to one or more of malicious email filter, release and search services; and
(iv) a web browser control element (318) providing access to HTTP response filter and report services; and
an administration module (310) for maintaining permission attributes for users of the network, said attributes defining access to said control elements (312 to 318); and having a delegation hierarchy wherein a Network Operations Center, NOC, (202) of a managed security service provider can set a permission attribute for a user or group of users to administrator, and the user or group of users with an administrator permission attribute can set another user or group of users to have a user permission attribute,
wherein the attributes are respectively associated with said control elements (312 to 318) and each have associated capability levels defining a level of access for the respective services, and the capability level determines whether the user is allowed to set parameters for the associated services, and determines interface components viewable and accessible by the user on an interface generated by the portal.

2. An administration portal as claimed in claim 1, wherein at least one capability level determines search fields available to a user of the search service, determines data associated with the message that can be displayed, or determines whether the user is able to set parameters of a spam filter service of the spam control element.

3. An administration portal as claimed in any one of the preceding claims, wherein report services of the control elements generate and send a report interface to a user, associated with an administrator permission attribute, for a group of users of the network.

4. A network security system including a managed security service provider, at least one network security server, and an administration portal as claimed in any one of the preceding claims.

5. An administration process of an Internet threat protection security server (100), including:
allowing a user of a network to access respective services performed by said security server, the services including:
a mail search service to search emails that have been processed by the security server;
spam filter, release, search, blacklisting and whitelisting services;
malicious email filter, release and search services; and
HTTP response filter and report services;
maintaining permission attributes for users or groups of users of the network, said permission attributes defining access to said services and having a delegation hierarchy;
wherein a managed security service provider can set a permission attribute for a user or group of users to administrator, and a user or group of users with an administrator permission attribute can set another user or group of users to have a user permission attribute;
wherein the attributes are respectively associated with said control elements; and
setting associated capability levels for the attributes to define a level of access for the respective services, and the capability level determines whether the user is allowed to set parameters for the associated services, and determines the interface components viewable and accessible by the user on an interface generated by the portal.

6. An administration process for a network security server as claimed in claim 5, wherein at least one capability level determines search fields available to a user of the search service, determines data associated with the message that can be displayed, or determines whether the user is able to set parameters of a spam filter service.

7. An administration process for a network security server as claimed in any one claims 5 or 6, including generating and sending a report interface to a user, associated with an administrator permission attribute, for a group of users of the network.

## Patentansprüche

1. Verwaltungsportal eines Internetbedrohungsschutz-Sicherheitsservers (100), Folgendes enthaltend:
Steuerelemente, die es einem Benutzer eines Netzwerks ermöglichen, auf entsprechende von dem Internetbedrohungsschutz-Sicherheitsserver geleistete Dienste zuzugreifen, wobei die Steuerelemente Folgendes enthalten:
(i) ein Mail-Steuerelement (312), welches Zugriff auf einen Suchdienst zum Durchsuchen von durch den Sicherheitsserver bearbeiteten E-Mails bereitstellt;
(ii) ein Spamsteuerelement (314), das Zugang zu Filter-, Freigabe-, Such-, Blacklisting- und/oder Whitelistingdiensten bereitstellt;
(iii) ein Schadsoftwaresteuerelement (316), das Zugang zu Schadhafte-E-Mail-Filter-, Freigabe- und Suchdiensten bereitstellt; und
(iv) ein Webbrowsersteuerelement (318), das Zugang zu HTTP-Antwortfilter- und Berichtsdiensten bereitstellt; und
ein Verwaltungsmodul (310) zum Verwalten von Berechtigungsattributen für Benutzer des Netzwerks, wobei die Attribute Zugang zu den Steuerelementen (312 bis 318) definieren; und welches eine Delegierungshierarchie aufweist, wobei ein Netzwerkbetriebszentrum (Network Operations Center - NOC) (202) eines verwalteten Sicherheitsdienstanbieters Berechtigungsattribute für einen Benutzer oder eine Gruppe von Benutzern auf "Administrator" stellen kann, und der Benutzer oder die Gruppe von Benutzern mit einem Administratorberechtigungsattribut ein Benutzerberechtigungsattribut an einen anderen Benutzer oder eine Gruppe von Benutzern vergeben kann,
wobei die Attribute jeweils mit den Steuerelementen (312 bis 318) verknüpft sind und jeweils verknüpfte Fähigkeitsgrade aufweisen, die eine Zugangsstufe für die jeweiligen Dienste definieren, und der Fähigkeitsgrad bestimmt, ob es dem Benutzer gestattet ist, Parameter für die verknüpften Dienste einzustellen, und Schnittstellenkomponenten bestimmt, die für den Benutzer auf einer von dem Portal erstellten Schnittstelle sichtbar und zugänglich sind.

2. Verwaltungsportal nach Anspruch 1, wobei wenigstens ein Fähigkeitsgrad Suchfelder bestimmt, die einem Benutzer des Suchdienstes zur Verfügung stehen, mit der anzeigbaren Nachricht verknüpfte Daten bestimmt oder bestimmt, ob der Benutzer in der Lage ist, Parameter eines Spamfilterdienstes des Spamsteuerelements einzustellen.

3. Verwaltungsportal nach einem der vorhergehenden Ansprüche, wobei Berichtsdienste der Steuerelemente für eine Gruppe von Benutzern des Netzwerks eine Berichtschnittstelle erstellen und an einen mit einem Administratorberechtigungsattribut verknüpften Benutzer senden.

4. Netzwerksicherheitssystem, einschließlich eines verwalteten Sicherheitsdienstanbieters, wenigstens eines Netzwerksicherheitsservers und eines Verwaltungsportals nach einem der vorhergehenden Ansprüche.

5. Verwaltungsvorgang eines Internetbedrohungsschutz-Sicherheitsservers (100), Folgendes enthaltend:
Ermöglichen, einem Benutzer eines Netzwerks, auf entsprechende von dem Sicherheitsserver geleistete Dienste zuzugreifen, wobei die Dienste Folgendes enthalten:
einen Mail-Suchdienst zum Durchsuchen von durch den Sicherheitsserver bearbeiteten E-Mails;
Spamfilter-, Freigabe-, Such-, Blacklisting- und Whitelistingdienste;
Schadhafte-E-Mail-Filter-, Freigabe- und Suchdienste; und
HTTP-Antwortfilter- und Berichtsdienste;
Verwalten von Berechtigungsattributen für Benutzer oder Gruppen von Benutzern des Netzwerks, wobei die Berechtigungsattribute Zugang zu Diensten definieren und eine Delegierungshierarchie aufweisen;
wobei ein verwalteter Sicherheitsdienstanbieter ein Berechtigungsattribut für einen Benutzer oder eine Gruppe von Benutzern auf "Administrator" stellen kann, und ein Benutzer oder eine Gruppe von Benutzern mit einem Administratorberechtigungsattribut ein Benutzerberechtigungsattribut an einen anderen Benutzer oder eine Gruppe von Benutzern vergeben kann;
wobei die Attribute entsprechend mit den Steuerelementen verknüpft sind; und
das Einstellen von verknüpften Fähigkeitsgraden für die Attribute zum Definieren einer Zugangsstufe für die jeweiligen Dienste, und wobei der Fähigkeitsgrad bestimmt, ob es dem Benutzer gestattet ist, Parameter für die verknüpften Dienste einzustellen, und die Schnittstellenkomponenten bestimmt, die für den Benutzer auf einer von dem Portal erstellten Schnittstelle sichtbar und zugänglich sind.

6. Verwaltungsvorgang für einen Netzwerksicherheitsserver nach Anspruch 5, wobei wenigstens ein Fähigkeitsgrad Suchfelder bestimmt, die einem Benutzer des Suchdienstes zur Verfügung stehen, mit der anzeigbaren Nachricht verknüpfte Daten bestimmt oder bestimmt, ob der Benutzer in der Lage ist, Parameter eines Spamfilterdienstes einzustellen.

7. Verwaltungsvorgang für einen Netzwerksicherheitsserver nach einem der Ansprüche 5 und 6, einschließlich, für eine Gruppe von Benutzern des Netzwerks, des Erzeugens einer Berichtschnittstelle und des Sendens derselben an einen mit einem Administratorberechtigungsattribut verknüpften Benutzer.

## Revendications

1. Portail d'administration d'un serveur de sécurité de protection contre des menaces d'Internet (100), comportant :
des éléments de commande autorisant un utilisateur d'un réseau à accéder à des services respectifs réalisés par ledit serveur de sécurité de protection contre des menaces d'Internet, lesdits éléments de commande comportant :
(i) un élément de commande de courrier (312) fournissant un accès à un service de recherche pour rechercher des courriels qui ont été traités par le serveur de sécurité ;
(ii) un élément de commande de pourriel (314) fournissant un accès à un ou plusieurs parmi des services de filtre, d'émission, de recherche, de mise en liste noire et de mise en liste blanche ;
(iii) un élément de commande de logiciel malveillant (316) fournissant un accès à un ou plusieurs parmi des services de filtre, d'émission et de recherche de courriels malveillants ; et
(iv) un élément de commande de navigateur Web (318) fournissant un accès à des services de filtre et de rapport de réponse HTTP ; et
un module d'administration (310) pour conserver des attributs de permission pour des utilisateurs du réseau, lesdits attributs définissant un accès auxdits éléments de commande (312 à 318) ; et ayant une hiérarchie de délégation dans lequel un centre d'exploitation du réseau, NOC (202) d'un fournisseur de services de sécurité gérés peut établir un attribut de permission d'administrateur pour un utilisateur ou un groupe d'utilisateurs, et l'utilisateur ou le groupe d'utilisateurs avec un attribut de permission d'administrateur peut établir un autre utilisateur ou groupe d'utilisateurs pour qu'il ait un attribut de permission d'utilisateur,
dans lequel les attributs sont associés respectivement auxdits éléments de commande (312 à 318) et ont chacun des niveaux de capacité associés définissant un niveau d'accès pour les services respectifs, et le niveau de capacité détermine si l'utilisateur est autorisé à établir des paramètres pour les services associés, et détermine des composants d'interface visibles et accessibles par l'utilisateur sur une interface générée par le portail.

2. Portail d'administration selon la revendication 1, dans lequel au moins un niveau de capacité détermine des champs de recherche disponibles pour un utilisateur du service de recherche, détermine des données associées au message qui peuvent être affichées, ou détermine si l'utilisateur est capable d'établir des paramètres d'un service de filtre de pourriels de l'élément de commande de pourriel.

3. Portal d'administration selon l'une quelconque des revendications précédentes, dans lequel des services de rapport des éléments de commande génèrent et envoient une interface de rapport à un utilisateur, associé à un attribut de permission d'administrateur, pour un groupe d'utilisateurs du réseau.

4. Système de sécurité de réseau comportant un fournisseur de services de sécurité gérés, au moins un serveur de sécurité de réseau et un portail d'administration tel que revendiqué dans l'une quelconque des revendications précédentes.

5. Procédé d'administration d'un serveur de sécurité de protection contre des menaces d'Internet (100), comportant :
l'autorisation à un utilisateur d'un réseau d'accéder à des services respectifs réalisés par ledit serveur de sécurité, les services comportant :
un service de recherche de courrier pour rechercher des courriels qui ont été traités par le serveur de sécurité ;
des services de filtre, d'émission, de recherche, de mise en liste noire et de mise en liste blanche de pourriels ;
des services de filtre, d'émission et de recherche de courriels malveillants ; et
des services de filtre et de rapport de réponse HTTP ;
la conservation d'attributs de permission pour des utilisateurs ou des groupes d'utilisateurs du réseau, lesdits attributs de permission définissant un accès auxdits services et ayant une hiérarchie de délégation ;
dans lequel un fournisseur de services de sécurité gérés peut établir un attribut de permission d'administrateur pour un utilisateur ou un groupe d'utilisateurs, et un utilisateur ou un groupe d'utilisateurs avec un attribut de permission d'administrateur peut établir un autre utilisateur ou groupe d'utilisateurs pour qu'il ait un attribut de permission d'utilisateur ;
dans lequel les attributs sont associés respectivement auxdits éléments de commande ; et
l'établissement de niveaux de capacité associés pour les attributs pour définir un niveau d'accès pour les services respectifs, et le niveau de capacité détermine si l'utilisateur est autorisé à établir des paramètres pour les services associés, et détermine les composants d'interface visibles et accessibles par l'utilisateur sur une interface générée par le portail.

6. Procédé d'administration pour un serveur de sécurité de réseau selon la revendication 5, dans lequel au moins un niveau de capacité détermine des champs de recherche disponibles pour un utilisateur du service de recherche, détermine des données associées au message qui peuvent être affichées, ou détermine si l'utilisateur est capable d'établir des paramètres d'un service de filtre de pourriels.

7. Procédé d'administration pour un serveur de sécurité de réseau selon l'une quelconque des revendications 5 ou 6, comportant la génération et l'envoi d'une interface de rapport à un utilisateur, associé à un attribut de permission d'administrateur, pour un groupe d'utilisateurs du réseau.
